# EUROPÄISCHE PATENTANMELDUNG

(11) **EP 1 445 519 A1**
(43) Veröffentlichungstag der Anmeldung: **11.08.2004**
(21) Anmeldenummer: 03002847.6
(22) Anmeldetag: 07.02.2003
(51) Int. Cl.: F16J 15/08, F01D 11/00

(54) **Hockdruck-Dichtungsring für Dampfturbinen**

(71) Anmelder: SIEMENS AKTIENGESELLSCHAFT, 80333 München (DE)
(72) Erfinder: Haje, Detlef, Dr., 46236 Bottrop (DE)

(57) **Zusammenfassung**

Die Erfindung betrifft eine Anordnung zur Abdichtung eines Zwischenraumes von einem Außenraum zwischen einem ersten Dichtungspartner (1) und einem zweiten Dichtungspartner (2) mit einem rohrähnlichen Dichtungsring, der im Querschnitt zwei Schenkel (8, 9) aufweist, wobei der eine Schenkel am ersten Dichtungspartner (1) und der andere Schenkel am zweiten Dichtungspartner (2) anliegt und der Dichtungsring über eine Haltevorrichtung am zweiten Dichtungspartner (2) festgeklemmt wird.

## Beschreibung

Die vorliegende Erfindung betrifft eine wärmebewegliche Anordnung zur Abdichtung eines Innenraumes.

Im allgemeinen haben Dampfturbinen ein Innengehäuse oder innere Einbauten, welche aus verschiedenen mechanischen und thermischen Gründen mit einem Außengehäuse umgeben sein können. Im Betrieb'führen unterschiedliche Wärmedehnungen beider Teile zu Relativverschiebungen und Abstandsänderungen. Zur Vermeidung des Eintritts von Dampf in einen Innenraum werden Dichtungsanordnungen benötigt. Da Zuleitungen oder Ableitungen von Dampf durch den Innenraum zwischen beiden Gehäusen geführt werden müssen, wird zur Vermeidung des Eintritts von Dampf in den Innenraum eine Dichtungsanordnung benötigt, die trotz der Relativbewegungen und Abstandsänderungen bei allen Betriebszuständen gleichermaßen dicht ist und nur geringe Mengen an Dampf in den Innenraum eintreten lässt.

Eine solche Dichtungsanordnung wird in dem Dokument DE 41 36 408 A1 beschrieben. Dabei wird ein rohrähnlicher Zwischenring als Dichtungselement eingesetzt, der an einem Ende höhenbeweglich und an einem anderen Ende seitenbeweglich gehaltert ist, wobei der Zwischenring so gestaltet und angeordnet ist, dass eine positive Differenz zwischen dem Dampfdruck im Inneren des Zwischenringes und dem Druck im Zwischenraum immer zu einer den Zwischenring an eine Stützfläche anpressende Kraft führt. Ein Flattern des Zwischenringes soll durch die Gestaltung des Dichtungselementes verhindert werden.

Im Dokument DE 15 76 986 wird ein radial und axial wärmebeweglicher Gleitring-, vorzugsweise Winkelringverbindung beschrieben.

Die Einsatzgrenzen der vorgestellten Dichtungsanordnungen sind durch die Höhen- und Seitenbeweglichkeit, bzw. axialer und vertikaler Verschieblichkeit eingeschränkt. Die Dichtungsanordnungen werden für große Differenzdrücke unwirksam. Dies ist auf die mangelnde Festigkeit der Dichtungsanordnung zurückzuführen.

Weitere Dichtungsanordnungen sind die häufig eingesetzten sogenannten 1-Dichtungsringe. Diese rohrähnlichen Dichtungsringe werden meistens in Nuten von zwei Dichtungspartnern eingesetzt. Die I-Dichtungsringe können dadurch bei höheren Differenzdrücken eingesetzt werden. Nachteilig ist allerdings, dass eine Bewegung der Dichtungspartner lediglich in einer Richtung möglich ist.

Aufgabe der vorliegenden Erfindung ist es, eine Anordnung zur Abdichtung einer Dampfleitung gegenüber einem Innenraum anzugeben, welche Relativbewegungen und Veränderungen der Größe des Innenraumes ausgleichen kann.

Die Aufgabe wird gelöst durch einen rohrähnlichen Dichtungsring, der im Querschnitt zwei Schenkel aufweist und zwischen einem ersten Dichtungspartner und einem zweiten Dichtungspartner einen Innenraum abdichtet, wobei der Dichtungsring an einem Dichtungspartner mit einer Haltevorrichtung festgeklemmt wird. Durch das Festklemmen des Dichtungsringes mittels der Haltevorrichtung wird der Vorteil erreicht, dass die Dichtungsanordnung bei allen Betriebszuständen axial in ihrer Position gehalten wird.

In einer vorteilhaften Ausgestaltung weist ein Dichtungspartner eine Nut auf, in der ein Schenkel des rohrähnlichen Dichtungsringes bewegbar ist. Durch die Führung in einer Nut fällt ein Bewegungsfreiheitsgrad für den Schenkel weg. Eine Bewegung oder ein Flattern des Schenkels und somit der gesamten Dichtungsanordnung wird vermieden.

In einer weiteren vorteilhaften Ausgestaltung wird die Dichtungsanordnung mittels einer Vorrichtung, die als Ring ausgeführt ist, am zweiten Dichtungspartner verschraubt. Die Vorrichtung kann auch aus Ringsegmenten bestehen. Dadurch wird der Vorteil erzielt, dass die Dichtungsanordnung durch die Haltevorrichtung einerseits an den Dichtungspartner festklemmbar ist und andererseits für Wartungsarbeiten oder anderweitige Zwecke schnell lösbar ist.

In einer weiteren vorteilhaften Ausgestaltung wird die Berührungsfläche im ersten Dichtungspartner durch eine Auftragsschweißung geändert. Durch die Auftragsschweißung ändern sich die Eigenschaften der Berührungsfläche. Die Auftragsschweißung wird so gewählt, dass die Berührungsfläche härter und dadurch verschleißärmer wird.

In einer weiteren vorteilhaften Ausgestaltung wird die Dichtungsanordnung in einer Strömungsmaschine bzw. in einer Gasoder Dampfturbine eingesetzt.

Ausführungsbeispiele der Erfindung sind in den Zeichnungen dargestellt.

Es zeigen
- Figur 1: einen Längsschnitt durch eine Dampfturbine mit Darstellung einer Dichtungsanordnung zum Stand der Technik gehörend,
- Figur 2: einen Längsschnitt durch die Dichtungsanordnung
- Figur 3: einen Längsschnitt durch eine vorteilhafte Weitergestaltung der Dichtungsanordnung.

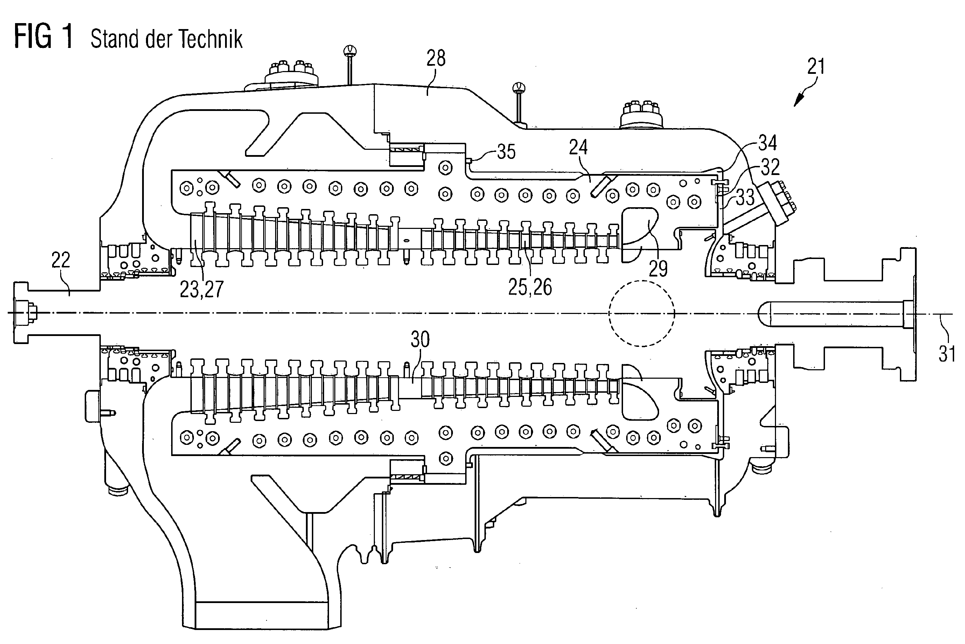

In Figur 1 ist eine zum Stand der Technik gehörende Dampfturbine (21) dargestellt. Ein drehgelagerter Rotor (22) weist Laufschaufeln (23) auf. Um den Rotor (22) ist ein Innengehäuse (24) angebracht. Im Innengehäuse (24) sind Leitschaufeln (25) derart angebracht, dass die Leitschaufelreihen (26) zwischen zwei Laufschaufelreihen (27) sind. Um das Innengehäuse (24) ist ein Außengehäuse (28) angebracht. Im Betrieb strömt ein Strömungsmedium über die Einlassöffnung (29) durch einen Strömungskanal (30) durch die Leit- und Laufschaufelreihen. Der um die Drehachse (31) drehgelagerte Rotor (22) wird in Rotation versetzt. Zwischen dem Innengehäuse (24) und dem Außengehäuse (28) ist ein I-förmiger Dichtungsring (32) angebracht, der die Zwischenräume (33, 34) gegeneinander abdichtet.

Ein weiterer Dichtungsring wird als ein U-förmiger Dichtungsring (35) ausgeführt. Dieser U-förmige Dichtungsring (35) liegt zwischen dem Innengehäuse (24) und dem Außengehäuse (28) an.

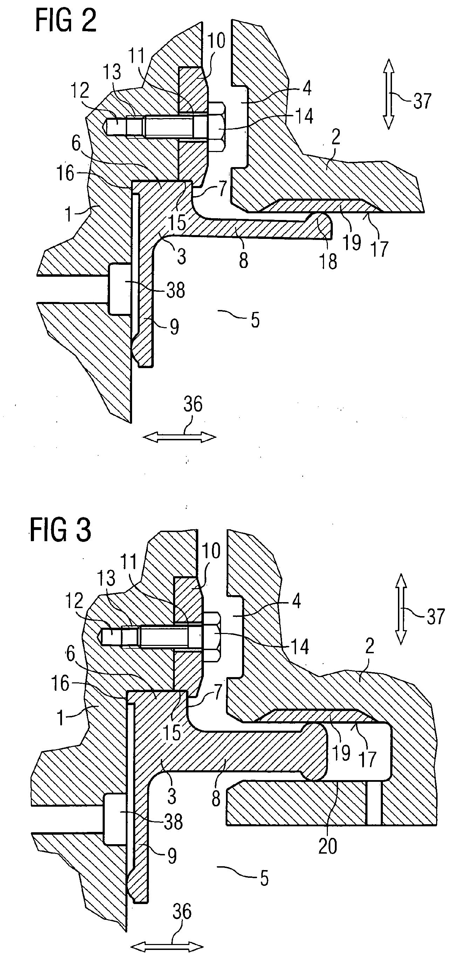

In Figur 2 ist der erste Dichtungspartner (1) und der zweite Dichtungspartner (2) mit der Dichtungsanordnung (3) dargestellt. Der erste Dichtungspartner (1) kann zum Beispiel das Innengehäuse (24) einer Dampfturbine (21) sein und der zweite Dichtungspartner (2) kann ein Außengehäuse (28) der Dampfturbine (21) sein. Selbstverständlich kann auch umgekehrt der Dichtungspartner (1) das Außengehäuse (28) und der Dichtungspartner (2) das Innengehäuse (24) einer Dampfturbine (21) sein. Zwischen dem ersten Dichtungspartner (1) und dem zweiten Dichtungspartner (2) befindet sich ein Zwischenraum (4), der durch die Dichtungsanordnung (3) von einem Innenraum (5) getrennt wird. Die Dichtungsanordnung (3) weist im Querschnitt eine L-förmige Gestalt auf. Die Dichtungsanordnung (3) ist als ein Dichtungsring ausgeführt, der rotationssymmetrisch zu einer in Figur 2 nicht dargestellten Rotationsachse ist. In Klemmbereich (6) ist die Dichtungsanordnung (3) mit einem Vorsprung (7) versehen. Des weiteren weist die Dichtungsanordnung (3) zwei Schenkel (8, 9) auf. Im dargestellten Ausführungsbeispiel liegt der zweite Schenkel (8) am zweiten Dichtungspartner (2) und der erste Schenkel (9) am ersten Dichtungspartner (1) an. Am ersten Dichtungspartner (1) ist eine Haltevorrichtung (10) vorgesehen. Die Haltevorrichtung (10) weist eine Bohrung (11) auf. Im ersten Dichtungspartner ist eine Bohrung (12) mit einem Gewinde (13) angebracht, das in der Flucht der Bohrung (11) der Haltevorrichtung (10) ist. Durch eine Schraube (14) wird die Haltevorrichtung (10) an den ersten Dichtungspartner (1) verschraubt. Die Haltevorrichtung (10) weist eine Aussparung (15) auf, in die der Vorsprung (7) der Haltevorrichtung (10) passt. Die Haltevorrichtung (10) übt durch Festdrehen der Schraube (14) über die Aussparung (15) eine Kraft auf den Vorsprung (7) und somit auf die gesamte Dichtungsanordnung (13) in Richtung des Dichtungsparthers (1) aus. Die Dichtungsanordnung (3) ist demzufolge über die Haltevorrichtung (10) am ersten Dichtungspartner (1) fest eingeklemmt.

Der erste Schenkel (9) wird dadurch axial an den ersten Dichtungspartner (1) fixiert. Am zweiten Dichtungspartner (2) befindet sich eine zylindrische Kontaktfläche (17), an die der zweite Schenkel (8), der radial vorgespannt ist, in axialer Richtung verschiebbar angebracht ist.

Durch die Dichtungsanordnung (3) ist sowohl eine Bewegung des ersten Dichtungspartners (1) und des zweiten Dichtungspartners (2) zueinander hin und zueinander weg, also eine Bewegung in axialer Richtung (36) als auch eine Bewegung des ersten Dichtungspartners (1) und des zweiten Dichtungspartners (2) parallel zueinander, also eine Bewegung in radialer Richtung (37), möglich.

Die Anlage des ersten Schenkels (9) in axialer Richtung an dem ersten Dichtungspartner (1) und die Anlage des zweiten Schenkels (8) in radialer Richtung an dem zweiten Dichtungspartner (2) ist durch die Gestaltung der Dichtungsanordnung (3) sichergestellt.

Darüber hinaus wird durch die Gestaltung der Dichtungsanordnung (3) der Platzbedarf in radialer Richtung (37) gegenüber U- und I-Ringen deutlich reduziert. Der druckbeaufschlagte Raum in einer Hochdruck-Teilturbine kann durch die radiale kompakte Bauweise klein gehalten werden.

Da die beanspruchungsbestimmte Länge zwischen den Auflagern gegenüber I-Ringen reduziert ist, kann der ertragbare Differenzdruck gegenüber I-Ringen erhöht werden.

Die zulässige Axialverschiebung gegenüber einen U-Ring kann deutlich erhöht werden durch die axialverschiebliche Führung des zweiten Schenkels (8) an der zylindrischen Kontaktfläche (17). Dies erlaubt größere Relativverformungen als bisher beim Einsatz von U-Ringen zulässig sind; dies gestattet einen geringeren Materialeinsatz und eine platzsparende Bauweise.

Die Vorteile der bekannten Dichtungen, zum einen die hohe zulässige Druckdifferenz der U-Ringe und zum anderen die axiale Verschieblichkeit der I-Ringe, werden durch die neue Dichtungsanordnung (3) kombiniert. Insbesondere weist die neue Dichtungsanordnung (3) einen geringeren radialen Platzbedarf auf und gestaltet eine Reduzierung der Bauteilbeanspruchung.

Der zweite Schenkel (8) weist eine Wölbung (18) auf. Die Position des zweiten Dichtungspartners (2) und des zweiten Schenkels (8) ist derart, dass die beiden in Berührung kommen. Eine Bewegung der Dichtungsanordnung (3) ist fest mit der Bewegung des ersten Dichtungspartners (1) korreliert.

In Figur 3 ist eine vorteilhafte Ausgestaltung der Erfindung dargestellt. Hierbei weist der zweite Dichtungspartner (2) eine Nut (20) auf. Der zweite Schenkel (8) ist derart gestaltet, dass er in der Nut (20) bewegbar angeordnet ist.

In einer vorteilhaften Ausgestaltung kann die Kontaktfläche (17) durch eine Auftragsschweißung (19) verändert werden.

Die Haltevorrichtung (10) ist als ein Haltering ausgeführt, der rotationssymmetrisch zu einer in den Figuren 2 und 3 nicht dargestellten Rotationsachse ist. Alternativ kann die Haltevorrichtung einzelne Ringsegmente aufweisen.

Im ersten Dichtungspartner (1) kann eine Nut (38) ausgearbeitet werden, um temporäre Leckmassenströme abzuführen.

Durch die Anordnung und Gestaltung der Dichtungsanordnung (3) können der Zwischenraum (4) und der Innenraum (5) für hohe Drücke voneinander abgedichtet werden.

## Patentansprüche

1. Anordnung zur Abdichtung eines Zwischenraumes von einem Außenraum zwischen einem ersten Dichtungspartner (1) und einem zweiten Dichtungspartner (2) mit einem rohrähnlichem Dichtungsring, der im Querschnitt zwei Schenkel (8, 9) aufweist, wobei der eine Schenkel (9) am ersten Dichtungspartner und der andere Schenkel (8) am zweiten Dichtungspartner anliegt,
**dadurch gekennzeichnet, dass**
der Dichtungsring mit einer Haltevorrichtung (10) am zweiten Dichtungspartner (2) festgeklemmt wird.

2. Anordnung nach Anspruch 1,
**dadurch gekennzeichnet, dass**
der Schenkel (9) am ersten Dichtungspartner (1) in einer Nut (18) bewegbar ist.

3. Anordnung nach Anspruch 1 oder 2,
**dadurch gekennzeichnet, dass**
die Haltevorrichtung ein Ring oder Ringsegment ist, der am zweiten Dichtungspartner (2) verschraubt ist.

4. Anordnung nach einem der Ansprüche 1 bis 3,
mit einer Berührungsfläche zwischen dem ersten Dichtungspartner und dem Dichtungsring,
**dadurch gekennzeichnet, dass**
die Berührungsfläche im ersten Dichtungspartner (1) eine Auftragsschweißung aufweist.

5. Strömungsmaschine,
**gekennzeichnet durch**
eine Anordnung nach einem der Ansprüche 1 bis 4.

6. Gas- oder Dampfturbine,
**gekennzeichnet durch**
eine Anordnung nach einem der Ansprüche 1 bis 4.
